# EUROPÄISCHE PATENTSCHRIFT

(11) **EP 2 648 331 B1**
(45) Veröffentlichungstag und Bekanntmachung des Hinweises auf die Patenterteilung: **31.10.2018**
(21) Anmeldenummer: 13161933.0
(22) Anmeldetag: 02.04.2013
(51) Int. Cl.: H02P 7/295

(54) **Leistungssteuerungsvorrichtung und Verfahren zur Leistungssteuerung**
Power control device and method for power control
Dispositif de commande de puissance et procédé de commande de puissance

(30) Priorität: 02.04.2012 DE 102012102827
(43) Veröffentlichungstag der Anmeldung: 09.10.2013
(73) Patentinhaber: Kurz Elektronik GmbH, 75382 Althengstett (DE)
(72) Erfinder: Schulz, Detlef, 72657 Altenriet (DE); Bernhardt, Tobias, 72654 Neckartenzlingen (DE)
(74) Vertreter: Witte, Weller & Partner Patentanwälte mbB

(56) Entgegenhaltungen:
- DE-T1- 19 781 824
- DE-T2- 69 400 948

## Beschreibung

Die vorliegende Erfindung betrifft eine Leistungssteuerungsvorrichtung zur Leistungssteuerung eines elektrischen Verbrauchers, insbesondere eines elektrischen Motors, aufweisend eine Phasenanschnittschaltung mit einem TRIAC-Element und einer Steuerschaltung zur Ansteuerung des TRIAC-Elements, wobei das TRIAC-Element einen Steueranschluss, einen ersten mit einem Verbraucheranschlusspunkt verbundenen Hauptanschluss und einen zweiten mit einem Versorgungsspannungsanschlusspunkt verbundenen Hauptanschluss aufweist. Die Erfindung betrifft ferner ein Verfahren zur Leistungssteuerung eines elektrischen Verbrauchers.

Sogenannte Phasenanschnittschaltungen sind allgemein bekannt und werden in unterschiedlichsten Gebieten zur Leistungssteuerung elektrischer Verbraucher eingesetzt. Insbesondere werden sie beispielsweise zur Leistungssteuerung von elektrischen Motoren, beispielsweise in Staubsaugern, verwendet. Phasenanschnittschaltungen umfassen üblicherweise ein sogenannter TRIAC, welcher von einer Steuerlogik für einen bestimmten Zeitraum innerhalb einer Halbwelle der Netzspannung leitend geschaltet wird. Mit jedem Null-Durchgang des Versorgungsstroms geht der TRIAC wieder in den Sperrzustand, so dass die Steuerlogik erneut ein sogenanntes Zündsignal erzeugen muss, um den TRIAC in der nächsten Halbwelle wieder in den leitenden Zustand zu bringen.

Viele Phasenanschnittschaltungen sind mittlerweile mit einem sogenannten Sanftanlauf versehen, der dafür sorgt, dass die Leistung am elektrischen Verbraucher, bspw. einem elektrischen Motor, nach dem Einschalten langsam hochgefahren wird, so dass nicht gleich die volle Leistung zugeführt wird. Ist die Leistungssteuerung vom Benutzer so eingestellt, dass der Motor mit voller Leistung laufen soll, wird der volle Motorstrom durch den TRIAC getragen. Aufgrund der im TRIAC entstehenden Verlustleistung ist eine Kühlung erforderlich, um eine Beschädigung zu vermeiden.

Alternativ gibt es Lösungen, bei denen der TRIAC durch einen mechanischen Schalter, beispielsweise ein Relais, überbrückt wird, wenn der Benutzer die volle Leistung verlangt. Die Überbrückung sorgt dafür, dass der Strom nun nicht mehr durch den TRIAC getragen wird sondern vielmehr durch den Schalter. Eine solche Schaltung ist bspw. aus DE 197 81 824 T1 bekannt.

Ein solcher mechanischer Schalter hat den Vorteil, dass er einen sehr geringen Spannungsabfall und damit eine äußerst geringe Verlustleistung entwickelt. Allerdings hat ein mechanischer Schalter bzw. Kontakt den Nachteil, dass er beim Schließen prellt. Dieses Prellen hat verheerende Auswirkungen auf den TRIAC. Er wird zerstört. Die Ursache liegt darin begründet, dass nach dem Schließen des Kontakts der Motorstrom vollständig über den mechanischen Kontakt fließt, während der TRIAC etliche Mikrosekunden Zeit benötigt, um die im Halbleiter vorhandenen Ladungsträger zu rekombinieren. Je nach TRIAC und Laststrom können das bis zu ca. 100 Mikrosekunden sein. Unterbricht nun der Relaiskontakt in dieser Zeit den Stromfluss, ist der TRIAC gezwungen, den noch vollständig fließenden Motorstrom zu übernehmen. Selbst wenn der TRIAC alle Ladungsträger rekombiniert hat, kann durch den hohen Spannungsanstieg oder das Überschreiten der maximalen Sperrspannung der TRIAC zur Stromleitung gezwungen sein. Da ein TRIAC im Unterschied zu Transistoren jedoch nicht in der Lage ist, einen steilen Stromanstieg unmittelbar über die ganze Sperrschicht zu verteilen, kommt es zu einer sehr hohen Stromdichte in dem im Moment leitenden Teil der Sperrschicht. Dies führt zur Zerstörung des TRIACs. Das Prellen dauert bis zu einigen Millisekunden.

Die Aufgabe der vorliegenden Erfindung besteht deshalb darin, die eingangs genannte Leistungssteuerungsvorrichtung so weiterzubilden, dass eine Zerstörung des TRIACs verhindert wird.

Diese Aufgabe wird von der Leistungssteuerungsvorrichtung mit den Merkmalen des Anspruchs 1 gelöst.

Das heißt mit anderen Worten, dass mithilfe einer Umschalteinrichtung ein zum TRIAC-Element paralleler Leitungspfad zur Überbrückung aktiviert werden kann, wobei vor oder gleichzeitig mit der Aktivierung dieses Leitungspfads das TRIAC-Element von der Netzspannung getrennt wird. Der Strom kann somit von dem parallelen Leitungspfad vollständig getragen werden, wobei selbst ein Prellen eines Schaltelements keine Auswirkungen auf das TRIAC-Element hat, da eine Verbindung zur Netzspannung nicht mehr besteht. Zudem verbleibt das TRIAC-Element für ein oder mehrere Halbwellen der Netzspannung im Sperrzustand, in dem keine Zündsignale geliefert werden, wobei dann anschließend die Umschalteinrichtung den zweiten Leitungspfad deaktiviert, das heißt das TRIAC-Element von der Netzspannung trennt, und den ersten Leitungspfad aktiviert, so dass der Strom parallel zum TRIAC-Element fließt.

Bei einer bevorzugten Weiterbildung weist die Umschalteinrichtung ein mechanisches Schaltelement, insbesondere ein Relais mit einem Öffner-Kontakt und einem Schließer-Kontakt, auf, so dass der eine Leitungspfad aktivierbar und der andere deaktivierbar ist.

Der Vorteil eines Relais als Schaltelement ist darin zu sehen, dass es zum einen eine sehr geringe Verlustleistung besitzt, so dass bei voller Leistung keine Verlustleistung mit entsprechender Wärmeentwicklung entsteht. Darüber hinaus kann ein solches Relais einen Schließer-Kontakt und einen Öffner-Kontakt besitzen, die mechanisch gekoppelt sind, so dass sichergestellt ist, dass beim Öffnen des einen Leitungspfads der andere Leitungspfad geschlossen wird und umgekehrt. Darüber hinaus kann ein solches Relais bevorzugt so gewählt werden, dass der Öffner-Kontakt zeitlich früher öffnet als der Schließer-Kontakt schließt.

Bei einer weiteren bevorzugten Ausgestaltung weist die Umschalteinrichtung ein erstes und ein zweites mechanisches Schaltelement, insbesondere ein Relais, auf, wobei das erste Schaltelement einen Leitungspfad und das zweite Schaltelement den anderen Leitungspfad aktiviert bzw. deaktiviert.

Bei einer bevorzugten Weiterbildung ist eine Spannungserfassungseinrichtung vorgesehen, die die am Verbraucheranschlusspunkt anliegende Spannung erfasst. Weiter bevorzugt erfasst die Spannungserfassungseinrichtung einen Null-Durchgang der Spannung.

Dieser Null-Durchgang wird genutzt, um die Umschalteinrichtung dann anzusteuern, wenn der zweite Leitungspfad einen minimalen Strom trägt, so dass eine Induktionsspannung, welche nach einem Öffnen des Schließer-Kontakts des Schaltelements der Umschalteinrichtung durch das Prellen an der Motorinduktivität entsteht, gering bleibt und zudem nicht direkt auf das TRIAC-Element wirkt, da der geöffnete Öffner-Kontakt noch dazwischen ist.

Die der Erfindung zugrunde liegende Aufgabe wird auch von einem Verfahren zur Leistungssteuerung eines elektrischen Verbrauchers mit einer erfindungsgemäßen Leistungssteuerungsvorrichtung mit den Merkmalen des Anspruchs 7 gelöst.

Weitere Vorteile und Ausgestaltungen der Erfindung ergeben sich aus der Beschreibung und der beiliegenden Zeichnung. Dabei zeigen:
- Fig. 1: ein schematisches Blockschaltdiagramm einer Leistungssteuerungsvorrichtung;
- Fig. 2: ein schematisches Blockschaltdiagramm einer alternativen Leistungssteuerungsvorrichtung; und
- Fig. 3: ein detaillierteres Blockschaltdiagramm der in Fig. 2 gezeigten Leistungssteuerungsvorrichtung.

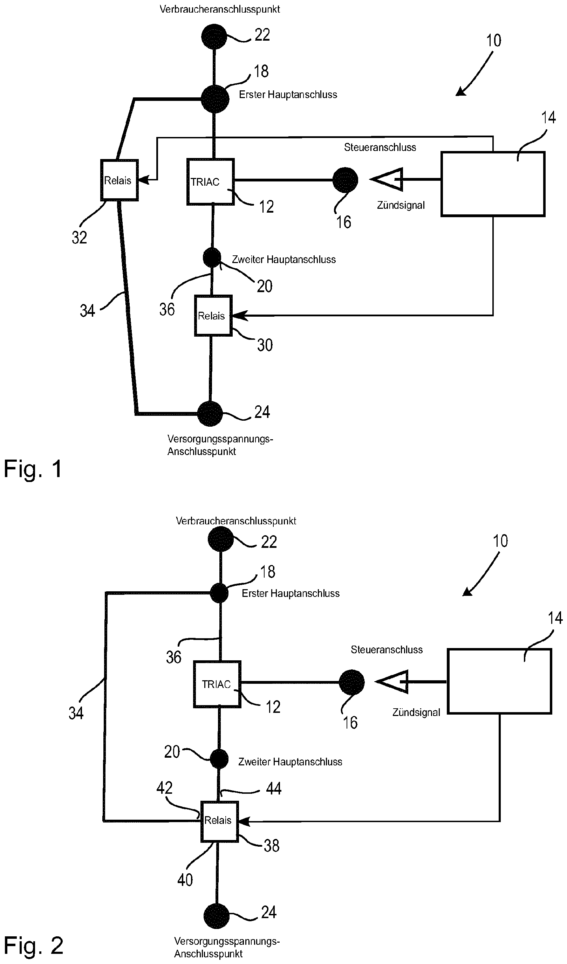

In Fig. 1 ist in Form eines Blockschaltdiagramms ein Ausschnitt einer Leistungssteuerungsvorrichtung dargestellt und mit dem Bezugszeichen 10 gekennzeichnet. Diese Leistungssteuerungsvorrichtung 10 dient zur Ansteuerung eines elektrischen Verbrauchers, insbesondere eines elektrischen Motors, wobei ein Benutzer die dem Motor zugeführte Leistung und damit seine Drehzahl einstellen kann. Die Steuerung der Leistung erfolgt über einen sogenannten Phasenanschnitt der Versorgungsspannung, wobei auf die Einzelheiten dieser bekannten Technik nicht weiter eingegangen werden soll.

Die zur Ausführung eines Phasenanschnitts erforderlichen Bauelemente sind insbesondere ein TRIAC 12 und eine Steuerlogik 14, die dem TRIAC Zündsignale an seinen Steuereingang (Gate) 16 zuführt.

Der TRIAC 12 besitzt neben dem Steuereingang 16 zwei Elektroden- bzw. Hauptanschlüsse, die in Fig. 1 mit den Bezugszeichen 18 und 20 gekennzeichnet sind. Der in Fig. 1 oben liegende Hauptanschluss wird nachfolgend als erster Hauptanschluss 18 bezeichnet, während der andere als zweiter Hauptanschluss 20 bezeichnet wird. In Fig. 1 sind noch ein Verbraucheranschlusspunkt 22 und ein Versorgungsspannungsanschlusspunkt 24 dargestellt, wobei diese Anschlusspunkte alleine zu Erläuterungszwecken gekennzeichnet sind. In der elektrischen Schaltung der Leistungssteuerungsvorrichtung 10 selbst müssen diese Anschlusspunkte 22, 24 nicht körperlich vorhanden sein. Vielmehr dienen diese Anschlusspunkte als Referenzpunkte innerhalb einer elektrischen Verdrahtung der Leistungssteuerungsvorrichtung. Der Versorgungsspannungsanschlusspunkt 24 steht dabei für eine elektrische Verbindung mit einer Versorgungsspannung, während der Verbraucheranschlusspunkt 22 für eine elektrische Verbindung mit dem Verbraucher, also beispielsweise dem Motor, steht.

Bei einer herkömmlichen Schaltung würde der zweite Hauptanschluss 20 mit dem Versorgungsspannungsanschlusspunkt 24 zusammenfallen, so dass sich eine elektrische Verbindung zwischen der Versorgungsspannung und dem Verbraucher ergibt, wenn der TRIAC 12 leitend ist. Es fließt dann ein Strom von einem Pol der Versorgungsspannung über den TRIAC und den Motor zum anderen Pol der Versorgungsspannung.

In Fig. 1 sind nun zusätzlich zwei Schaltelemente 30, 32 vorgesehen, die bevorzugt als mechanische Schaltelemente, beispielsweise Relais, ausgeführt sind. Das Schaltelement 30 liegt zwischen dem Versorgungsspannungsanschlusspunkt 24 und dem zweiten Hauptanschluss 20 des TRIACs 12, während das zweite Schaltelement 32 parallel zum TRIAC zwischen dem Versorgungsspannungsanschlusspunkt 24 und dem ersten Hauptanschluss 18 angeordnet ist. Das Schließen des ersten Schaltelements 30 führt damit zu einer Verbindung des Versorgungsspannungsanschlusspunkts 24 mit dem zweiten Hauptanschluss 20, während ein Schließen des zweiten Schaltelements 32 eine elektrische Verbindung zwischen dem Versorgungsspannungsanschlusspunkt 24 und dem ersten Hauptanschluss 18 bereitstellt. Diese Verbindung führt damit zu einer elektrischen Überbrückung des TRIACs 12 als auch des ersten Schaltelements 30.

Elektrisch gesehen ergeben sich somit zwischen dem Versorgungsspannungsanschlusspunkt 24 und dem Verbraucheranschlusspunkt 22 zwei Leitungspfade, die mit den Bezugszeichen 34 und 36 gekennzeichnet sind. Der erste Leitungspfad führt über das zweite Schaltelement 32, während der zweite Leitungspfad über das erste Schaltelement 30 und den TRIAC 12 führt.

Die Ansteuerung der beiden Schaltelemente 30, 32 erfolgt über die Steuerlogik 14 entsprechend einem bestimmten Plan, der nachfolgend noch erläutert wird. Bei der Leistungssteuerung des Motors kann grundsätzlich zwischen zwei Modi unterschieden werden, nämlich einerseits einem leistungsbegrenzten Modus und andererseits einem Volllast-Modus. Im Volllast-Modus findet kein Phasenanschnitt mehr statt, da die volle Leistung an den Verbraucher abgegeben wird, das heißt die gesamte Versorgungsspannung liegt am Motor während der gesamten Vollwelle an. Zur Verringerung von Verlustleistungen im TRIAC 12 ist in diesem Volllast-Modus der erste Leitungspfad geschlossen, das heißt aktiv, während der zweite Leitungspfad 36 geöffnet, das heißt deaktiviert, ist. Der Strom fließt damit vollständig über den ersten Leitungspfad 34.

Im leistungsbegrenzten Modus ist hingegen der erste Leitungspfad 34 geöffnet, so dass der zweite Leitungspfad 36 den gesamten fließenden Strom trägt.

Das heißt mit anderen Worten, dass im Volllast-Modus das zweite Schaltelement 32 geschlossen und das erste Schaltelement 30 geöffnet ist, während im leistungsbegrenzten Modus das erste Schaltelement 30 geschlossen und das zweite Schaltelement 32 geöffnet ist.

Um eine Zerstörung des TRIACs 12 beim Umschalten von einem Modus in den anderen, das heißt insbesondere beim Umschalten vom leistungsbegrenzten Modus in den Volllast-Modus, zu vermeiden, wird vor dem Schalten der Schaltelemente 30, 32 zunächst die Übertragung von Zündsignalen an den Steueranschluss des TRIACs 12 unterbrochen. Nach Ablauf einer vorgegebenen Zeitdauer, insbesondere nach Ablauf einer Halbwelle der Versorgungsspannung, wird das erste Schaltelement 30 geöffnet. Gleichzeitig oder bevorzugt zeitlich verzögert dazu wird das zweite Schaltelement 32 geschlossen. Durch die Zündsignalunterbrechung und das damit einhergehende Sperren des TRIACs 12 ist der elektrische Verbraucher, beispielsweise der Motor, für eine kurze Zeitdauer stromlos, allerdings wird er sich trägheitsbedingt weiter drehen. Das zweite Schaltelement 32 wird dann bevorzugt beim nächsten Null-Durchgang der Versorgungsspannung geschlossen, wobei kurz zuvor das erste Schaltelement 30 geöffnet wird.

Auf diese Art und Weise lässt sich gewährleisten, dass beim Schalten der mechanischen Kontakte der Schaltelemente noch kein Strom durch den Motor fließt, so dass die Induktionsspannung, die durch das Prellen des mechanischen Kontakts des zweiten Schaltelements 32 an der Motorinduktivität entsteht, gering bleibt und zudem nicht direkt auf das TRIAC 12 wirkt, da das geöffnete Schaltelement 30 noch dazwischen ist.

Insgesamt bedeutet dies folglich, dass der elektrische Verbraucher beim Umschalten vom leistungsbegrenzten Modus in den Volllast-Modus zumindest für eine Halbwelle stromlos ist, da das TRIAC im Sperrzustand ist und der erste Leitungspfad 34 noch nicht aktiviert ist.

Auf diese Art und Weise wird verhindert, dass der TRIAC 12 beim Umschalten auf den ersten Leitungspfad 34 zerstört wird.

In Fig. 2 ist eine alternative Ausgestaltung der zuvor beschriebenen Leistungssteuerungsvorrichtung 10 dargestellt, wobei gleiche Bauteile mit den gleichen Bezugszeichen gekennzeichnet sind. Der einzige Unterschied der Schaltung gemäß Fig. 2 ist darin zu sehen, dass die beiden Schaltelemente 30, 32 durch ein einziges Umschaltelement 38 ersetzt sind. Das Umschaltelement 38 ist so ausgebildet, dass es den Versorgungsspannungsanschlusspunkt 24 entweder mit dem ersten Hauptanschluss 18 oder mit dem zweiten Hauptanschluss 20 verbindet. Das Umschaltelement 38 besitzt folglich einen Eingangsanschluss 40, der mit dem Versorgungsspannungsanschlusspunkt 24 verbunden ist, einen ersten Ausgangsanschluss 42, der mit dem ersten Hauptanschluss 18 verbunden ist, und einen zweiten Ausgangsanschluss 44, der mit dem zweiten Hauptanschluss 20 verbunden ist. Eine Verbindung zwischen dem Eingangsanschluss 40 und einem Ausgangsanschluss des Umschaltelements 38 besteht nur wechselseitig, also entweder mit dem ersten oder mit dem zweiten Ausgangsanschluss 42, 44.

Als Umschaltelement 38 kommt beispielsweise ein mechanisches Schaltelement, vorzugsweise ein Relais, infrage, das einen Öffner-Kontakt und einen Schließer-Kontakt besitzt. Der Öffner-Kontakt liegt dabei beispielsweise zwischen Eingangsanschluss 40 und zweitem Ausgangsanschluss 44, während der Schließer-Kontakt zwischen Eingangsanschluss 40 und erstem Ausgangsanschluss 42 liegt. Öffner-Kontakt und Schließer-Kontakt sind bevorzugt so ausgelegt, dass der Öffner-Kontakt zeitlich gesehen vor dem Schließen des Schließer-Kontakts öffnet. Das bedeutet mit anderen Worten, dass die Verbindung zwischen Eingangsanschluss 40 und zweitem Ausgangsanschluss 44 getrennt wird und erst kurz danach die Verbindung zwischen Eingangsanschluss 40 und erstem Ausgangsanschluss 42 hergestellt wird.

Da die Funktionsweise dieser Leistungssteuerungsvorrichtung identisch zu der mit Bezug auf die Fig. 1 beschriebene Leistungssteuerungsvorrichtung 10 ist, wird auf die obigen Ausführungen verwiesen.

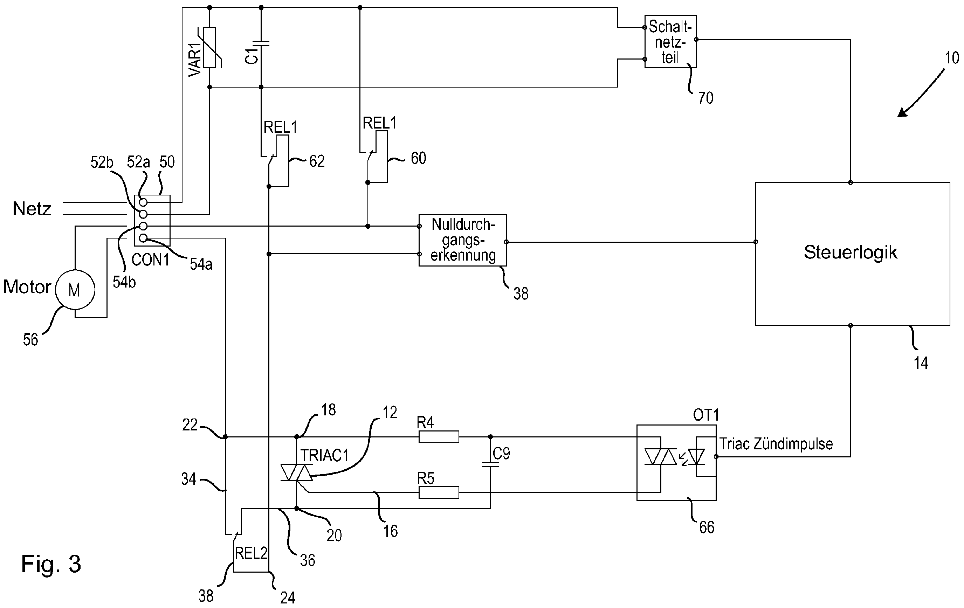

In Fig. 3 ist die zuvor beschriebene Leistungssteuerungsvorrichtung 10 detaillierter mit weiteren Komponenten als Blockschaltdiagramm dargestellt. Zu erkennen sind hierbei der TRIAC 12 und das Umschaltelement 38, das zwischen den beiden Leitungspfaden 34, 36 umschaltet. Die Schaltung in Fig. 3 umfasst eine Anschlussleiste 50, die zwei Anschlüsse 52a, 52b zum Anschluss an die Netzspannung sowie zwei Anschlüsse 54a, 54b zum Anschluss des elektrischen Verbrauchers, im vorliegenden Beispiel eines Motors 56, insbesondere eines Staubsaugermotors, aufweist. Der Anschluss 52a ist über ein Schaltelement 60 mit dem Anschluss 54b verbunden, während der Anschluss 52b über ein Schaltelement 62 mit dem Versorgungsspannungsanschlusspunkt 24 verbunden ist. Die beiden Schaltelemente 60, 62, die in Form eines Relais ausgeführt sein können, dienen als Hauptschalter für die Leistungssteuerung. Sind die beiden Schaltelemente 60, 62 geöffnet, ist ein Betrieb des Motors 56 nicht möglich. Sind die beiden Schaltelemente 60, 62 geschlossen, ergibt sich ein Stromfluss von einem der Anschlüsse 52a bzw. 52b über einen Anschluss 54a bzw. 54b, den Motor 56, den anderen Anschluss 54b bzw. 54a, zu dem Anschluss 52b bzw. 52a entweder über den TRIAC 12 oder parallel zum TRIAC 12, abhängig von der Schaltstellung des Umschaltelements 38.

Die zum Zünden des TRIACs 12 erforderlichen Zündsignale liefert die Steuerlogik 14, wobei ein Optotriac 66 eine galvanische Trennung ermöglicht.

Die Schaltung umfasst ferner ein Null-Durchgangs-Erkennungselement 68, das mit der Netzspannung, vorzugsweise über die beiden Schaltelemente 60, 62, verbunden ist und bei einem Null-Durchgang der Netzspannung ein Signal an die Steuerlogik 14 liefert. Diese Information verwendet die Steuerlogik 14 einerseits bei der Erzeugung von Zündsignalen für den Phasenanschnitt und andererseits für die Unterbrechung der Zündsignale beim Umschalten des Umschaltelements 38.

Schließlich ist noch ein Schaltnetzteil 70 vorgesehen, das eingangsseitig mit der Netzspannung verbunden ist und am Ausgang eine zur Versorgung der Steuerlogik 14 erforderliche gleichgerichtete Versorgungsspannung bereitstellt.

Die Funktionsweise dieser in Fig. 3 gezeigten Schaltung entspricht der Schaltung von Fig. 2, so dass darauf verwiesen werden kann.

Kurz zusammengefasst, wird nach dem Einschalten der beiden Schaltelemente 60, 62 der Motor 56 über den vom TRIAC 12 durchgeführten Phasenanschnitt langsam hochgefahren, wobei die entsprechenden Zündsignale von der Steuerlogik 14 erzeugt werden. Nach einer gewissen Zeitdauer ist die volle Leistung erreicht, das heißt der TRIAC 12 lässt jeweils eine gesamte Halbwelle durch.

Zu diesem Zeitpunkt wird in den Volllast-Modus gewechselt, in dem zunächst die Steuerlogik 14 keine Zündsignale mehr an den TRIAC 12 liefert. Da noch der zweite Leitungspfad 36 aktiviert ist, der TRIAC 12 aber sperrt, gibt es keinen Stromfluss durch den Motor 56. Dieser dreht sich jedoch aufgrund seiner Trägheit weiter. Mit dem nächsten Null-Durchgang der Netzspannung, was über das Null-Durchgangs-erkennungselement 68 detektiert wird, wird das Umschaltelement 38 umgeschaltet, um den ersten Leitungspfad zu aktivieren. Der Vorteil des Umschaltens des Umschaltelements 38 zum Zeitpunkt eines Null-Durchgangs der Versorgungsspannung liegt darin, dass beim Schalten der mechanischen Kontakte noch kein Strom durch den Motor fließt.

Insgesamt bietet die vorgenannte Leistungssteuerungsvorrichtung 10 eine geringe Verlustleistung im Volllast-Betrieb und die sichere Umschaltung vom leistungsbegrenzten Modus in den Volllast-Modus, ohne die Gefahr von Beschädigungen des TRIACs der Phasenanschnittschaltung.

## Patentansprüche

1. Leistungssteuerungsvorrichtung zur Leistungssteuerung eines elektrischen Verbrauchers, insbesondere eines elektrischen Motors (56), aufweisend:
eine Phasenanschnittschaltung mit einem TRIAC-Element (12) und einer Steuerschaltung (14) zur Ansteuerung des TRIAC-Elements, wobei das TRIAC-Element (12) einen Steueranschluss (Gate), einen ersten mit einem Verbraucheranschlusspunkt (22) verbundenen Hauptanschluss (18) und einen zweiten Hauptanschluss (20) aufweist, und
einem Versorgungsspannungsanschlusspunkt (24);
**dadurch gekennzeichnet, dass**
eine steuerbare Umschalteinrichtung (30, 32; 38) vorgesehen ist, die eine elektrische Verbindung zwischen einem mit dem Versorgungsspannungsanschlusspunkt (24) verbundenen Eingangsanschluss (40) und entweder einem ersten Ausgangsanschluss (42) oder einem zweiten Ausgangsanschluss (44) herstellt,
der erste Ausgangsanschluss (42) mit dem ersten Hauptanschluss (18) des TRIAC-Elements und der zweite Ausgangsanschluss (44) mit dem zweiten Hauptanschluss (20) verbunden ist, so dass sich zwischen Verbraucheranschlusspunkt (22) und Versorgungsspannungsanschlusspunkt (24) ein erster Leitungspfad (34) über die Umschalteinrichtung und den ersten Ausgangsanschluss (42), und ein zweiter Leitungspfad (36) zwischen dem zweiten Ausgangsanschluss (44), dem zweiten Hauptanschluss (20) und dem ersten Hauptanschluss (18) des TRIAC-Elements (12) ergibt, und
eine Steuereinrichtung (14) vorgesehen und ausgebildet ist, das TRIAC-Element (12) zu sperren und anschließend nach einer vorgebbaren Zeitdauer die Umschalteinrichtung (38) anzusteuern, um den ersten Leitungspfad (34) zu aktivieren und den zweiten Leitungspfad (36) zu deaktivieren.

2. Leistungssteuerungsvorrichtung nach Anspruch 1, **dadurch gekennzeichnet, dass** die Umschalteinrichtung (38) ein mechanisches Schaltelement, insbesondere ein Relais mit einem Öffner-Kontakt und einem Schließer-Kontakt, aufweist, so dass der eine Leitungspfad aktivierbar und der andere deaktivierbar ist.

3. Leistungssteuerungsvorrichtung nach Anspruch 1, **dadurch gekennzeichnet, dass** die Umschalteinrichtung (38) ein erstes und ein zweites mechanisches Schaltelement (30, 32), insbesondere ein Relais aufweist, wobei das erste Schaltelement (32) einen Leitungspfad und das zweite Schaltelement (30) den anderen Leitungspfad aktiviert bzw. deaktiviert.

4. Leistungssteuerungsvorrichtung nach Anspruch 1, **dadurch gekennzeichnet, dass** die vorgebbare Zeitdauer zumindest eine Halbwelle der Versorgungsspannung ist.

5. Leistungssteuerungsvorrichtung nach einem der Ansprüche 1 bis 3, **dadurch gekennzeichnet, dass** eine Spannungserfassungseinrichtung (68) vorgesehen ist, die die am Verbraucheranschlusspunkt (22) anliegende Spannung erfasst.

6. Leistungssteuerungsvorrichtung nach Anspruch 5, **dadurch gekennzeichnet, dass** die Spannungserfassungseinrichtung einen Null-Durchgang der Spannung erfasst.

7. Verfahren zur Leistungssteuerung eines elektrischen Verbrauchers, insbesondere eines elektrischen Motors, mit einer Leistungssteuerungsvorrichtung zur Leistungssteuerung eines elektrischen Verbrauchers, insbesondere eines elektrischen Motors (56), aufweisend:
eine Phasenanschnittschaltung mit einem TRIAC-Element (12) und einer Steuerschaltung (14) zur Ansteuerung des TRIAC-Elements, wobei das TRIAC-Element (12) einen Steueranschluss (Gate), einen ersten mit einem Verbraucheranschlusspunkt (22) verbundenen Hauptanschluss (18) und einen zweiten Hauptanschluss (20) aufweist, und einem Versorgungsspannungsanschlusspunkt (24); wobei eine steuerbare Umschalteinrichtung (30, 32; 38) vorgesehen ist, die eine elektrische Verbindung zwischen einem mit dem Versorgungsspannungsanschlusspunkt (24) verbundenen Eingangsanschluss (40) und entweder einem ersten Ausgangsanschluss (42) oder einem zweiten Ausgangsanschluss (44) herstellt, der erste Ausgangsanschluss (42) mit dem ersten Hauptanschluss (18) des TRIAC-Elements und der zweite Ausgangsanschluss (44) mit dem zweiten Hauptanschluss (20) verbunden ist, so dass sich zwischen Verbraucheranschlusspunkt (22) und Versorgungsspannungsanschlusspunkt (24) ein erster Leitungspfad (34) über die Umschalteinrichtung und den ersten Ausgangsanschluss (42), und ein zweiter Leitungspfad (36) zwischen dem zweiten Ausgangsanschluss (44), dem zweiten Hauptanschluss (20) und dem ersten Hauptanschluss (18) des TRIAC-Elements (12) ergibt,
wobei das Verfahren aufweist:
Hochfahren der Leistung des elektrischen Verbrauchers (56) durch Verringern des Zündwinkels der Phasenanschnittschaltung mit dem Zündsignal empfangenden TRIAC-Element (12) bis zum Erreichen der maximalen Leistung,
Aussetzen der Zuleitung von Zündsignalen und das damit einhergehende Sperren des TRIAC-Elements (12),
Trennen des zweiten Hauptanschlusses (20) des TRIAC-Elements (12) vom Versorgungsspannungsanschlusspunkt (24) durch die Umschalteinrichtung (30, 32; 38) nach einer vorgegebenen Zeitdauer seit dem Sperren, und
Verbinden des Versorgungsspannungsanschlusspunkts (24) mit dem Verbraucheranschlusspunkt (22) durch die Umschalteinrichtung (30, 32; 38) unter Umgehung des TRIAC-Elements (12) über den ersten Leitungspfad (34).

8. Verfahren nach Anspruch 7, **dadurch gekennzeichnet, dass** die vorgegebene Zeitdauer zumindest die Zeitdauer einer Halbwelle der Versorgungsspannung ist.

## Claims

1. Power control apparatus for controlling the power of an electrical load, in particular of an electric motor (56), said power control apparatus having:
a phase gating circuit having a TRIAC element (12) and a control circuit (14) for actuating the TRIAC element, wherein the TRIAC element (12) has a control connection (Gate), a first main connection (18), which is connected to a load connection point (22), and a second main connection (20), and
a supply voltage connection point (24);
**characterized in that**
a controllable changeover device (30, 32; 38), which establishes an electrical connection between an input connection (40), which is connected to the supply voltage connection point (24), and either a first output connection (42) or a second output connection (44), is provided,
the first output connection (42) is connected to the first main connection (18) of the TRIAC element and the second output connection (44) is connected to the second main connection (20) in such a way that a first line path (34) via the changeover device and the first output connection (42) is created between the load connection point (22) and the supply voltage connection point (24) and a second line path (36) is created between the second output connection (44), the second main connection (20) and the first main connection (18) of the TRIAC element (12), and
a control device (14) is provided and configured to lock the TRIAC element (12) and then to actuate the changeover device (38) after a prescribed duration in order to activate the first line path (34) and to deactivate the second line path (36).

2. Power control apparatus according to Claim 1, **characterized in that** the changeover device (38) has a mechanical switching element, in particular a relay having a break contact and a make contact, such that the one line path can be activated and the other can be deactivated.

3. Power control apparatus according to Claim 1, **characterized in that** the changeover device (38) has a first and a second mechanical switching element (30, 32), in particular a relay, wherein the first switching element (32) activates or deactivates one line path and the second switching element (30) activates or deactivates the other line path.

4. Power control apparatus according to Claim 1, **characterized in that** the prescribable duration is at least one half-cycle of the supply voltage.

5. Power control apparatus according to one of Claims 1 to 3, **characterized in that** a voltage detection device (68), which detects the voltage applied at the load connection point (22), is provided.

6. Power control apparatus according to Claim 5, **characterized in that** the voltage detection device detects a zero crossing of the voltage.

7. Method for controlling the power of an electrical load, in particular of an electric motor, having a power control apparatus for controlling the power of an electrical load, in particular of an electric motor (56), said power control apparatus having:
a phase gating circuit having a TRIAC element (12) and a control circuit (14) for actuating the TRIAC element, wherein the TRIAC element (12) has a control connection (Gate), a first main connection (18), which is connected to a load connection point (22), and a second main connection (20), and a supply voltage connection point (24); wherein a controllable changeover device (30, 32; 38), which establishes an electrical connection between an input connection (40), which is connected to the supply voltage connection point (24), and either a first output connection (42) or a second output connection (44), is provided, the first output connection (42) is connected to the first main connection (18) of the TRIAC element and the second output connection (44) is connected to the second main connection (20) in such a way that a first line path (34) via the changeover device and the first output connection (42) is created between the load connection point (22) and the supply voltage connection point (24) and a second line path (36) is created between the second output connection (44), the second main connection (20) and the first main connection (18) of the TRIAC element (12),
wherein the method comprises:
increasing the power of the electrical load (56) by reducing the ignition angle of the phase gating circuit having the TRIAC element (12) that receives ignition signals until the maximum power is reached,
suspending the supply of ignition signals and the associated locking of the TRIAC element (12),
isolating the second main connection (20) of the TRIAC element (12) from the supply voltage connection point (24) by way of the changeover device (30, 32; 38) after a prescribed duration since the locking, and
connecting the supply voltage connection point (24) to the load connection point (22) by way of the changeover device (30, 32; 38) by bypassing the TRIAC element (12) via the first line path (34).

8. Method according to Claim 7, **characterized in that** the prescribed duration is at least the duration of one half-cycle of the supply voltage.

## Revendications

1. Dispositif de commande de puissance destiné à la commande de puissance d'une charge électrique, notamment d'un moteur électrique (56), comprenant :
un circuit de découpage de phase comportant un élément TRIAC (12) et un circuit de commande (14) destiné à exciter l'élément TRIAC, l'élément TRIAC (12) possédant une borne de commande (gâchette), une première borne principale (18) reliée à un point de raccordement de charge (22) et une deuxième borne principale (20), et
un point de raccordement de tension d'alimentation (24) ;
**caractérisé en ce que**
un appareil d'inversion (30, 32 ; 38) commandable est présent, lequel établit une liaison électrique entre une borne d'entrée (40) reliée au point de raccordement de tension d'alimentation (24) et soit une première borne de sortie (42), soit une deuxième borne de sortie (44),
la première borne de sortie (42) est reliée à la première borne principale (18) de l'élément TRIAC et la deuxième borne de sortie (44) à la deuxième borne principale (20), de manière à obtenir un premier trajet de conduction (34) entre le point de raccordement de charge (22) et le point de raccordement de tension d'alimentation (24) par le biais de l'appareil d'inversion et de la première borne de sortie (42), et un deuxième trajet de conduction (36) entre la deuxième borne de sortie (44), la deuxième borne principale (20) et la première borne principale (18) de l'élément TRIAC (12), et
un appareil de commande (14) est présent et configuré pour bloquer l'élément TRIAC (12) et ensuite, après une durée qui peut être prédéfinie, commander l'appareil d'inversion (38) pour activer le premier trajet de conduction (34) et désactiver le deuxième trajet de conduction (36).

2. Dispositif de commande de puissance selon la revendication 1, **caractérisé en ce que** l'appareil d'inversion (38) possède un élément de commutation mécanique, notamment un relais doté d'un contact à ouverture et d'un contact à fermeture, de sorte qu'un trajet de conduction puisse être activé et l'autre désactivé.

3. Dispositif de commande de puissance selon la revendication 1, **caractérisé en ce que** l'appareil d'inversion (38) possède un premier et un deuxième élément de commutation mécanique (30, 32), notamment un relais, le premier élément de commutation mécanique (32) activant ou désactivant un trajet de conduction et le deuxième élément de commutation mécanique (30) activant ou désactivant l'autre trajet de conduction.

4. Dispositif de commande de puissance selon la revendication 1, **caractérisé en ce que** la durée qui peut être prédéfinie est au moins égale à une demi-onde de la tension d'alimentation.

5. Dispositif de commande de puissance selon l'une des revendications 1 à 3, **caractérisé en ce qu'**un appareil de détection de tension (68) est présent, lequel détecte la tension appliquée au point de raccordement de charge (22).

6. Dispositif de commande de puissance selon la revendication 5, **caractérisé en ce que** l'appareil de détection de tension détecte un passage par zéro de la tension.

7. Procédé de commande de puissance d'une charge électrique, notamment d'un moteur électrique, avec un dispositif de commande de puissance destiné à la commande de puissance d'une charge électrique, notamment d'un moteur électrique (56), comprenant :
un circuit de découpage de phase comportant un élément TRIAC (12) et un circuit de commande (14) destiné à exciter l'élément TRIAC, l'élément TRIAC (12) possédant une borne de commande (gâchette), une première borne principale (18) reliée à un point de raccordement de charge (22) et une deuxième borne principale (20), et un point de raccordement de tension d'alimentation (24) ; un appareil d'inversion (30, 32 ; 38) commandable étant présent, lequel établit une liaison électrique entre une borne d'entrée (40) reliée au point de raccordement de tension d'alimentation (24) et soit une première borne de sortie (42), soit une deuxième borne de sortie (44), la première borne de sortie (42) étant reliée à la première borne principale (18) de l'élément TRIAC et la deuxième borne de sortie (44) à la deuxième borne principale (20), de manière à obtenir un premier trajet de conduction (34) entre le point de raccordement de charge (22) et le point de raccordement de tension d'alimentation (24) par le biais de l'appareil d'inversion et de la première borne de sortie (42), et un deuxième trajet de conduction (36) entre la deuxième borne de sortie (44), la deuxième borne principale (20) et la première borne principale (18) de l'élément TRIAC (12),
le procédé comprenant les étapes suivantes :
augmentation progressive de la puissance de la charge électrique (56) en réduisant l'angle d'amorçage du circuit de découpage de phase avec l'élément TRIAC (12) qui reçoit le signal d'amorçage jusqu'à atteindre la puissance maximale,
interruption de la ligne d'arrivée des signaux d'amorçage et blocage qui en découle de l'élément TRIAC (12),
déconnexion de la deuxième borne principale (20) de l'élément TRIAC (12) du point de raccordement de tension d'alimentation (24) par l'appareil d'inversion (30, 32 ; 38) après une durée qui peut être prédéfinie depuis le blocage, et
connexion du point de raccordement de tension d'alimentation (24) au point de raccordement de charge (22) par l'appareil d'inversion (30, 32 ; 38) en contournant l'élément TRIAC (12) par le biais du premier trajet de conduction (34).

8. Procédé selon la revendication 7, **caractérisé en ce que** la durée qui peut être prédéfinie est au moins égale à une demi-onde de la tension d'alimentation.
